# EUROPEAN PATENT APPLICATION

(11) **EP 4 797 741 A1**
(43) Date of publication of application: **26.08.2026**
(21) Application number: 26155716.9
(22) Date of filing: 02.02.2026
(51) Int. Cl.: H04W 4/80

(54) **APPARATUS FOR PROCESSING INFORMATION FOR COMMUNICATION AND METHOD THEREOF**

(30) Priority: 21.02.2025 KR 20250022969
(71) Applicant: I-SENS, INC., Seoul 06646 (KR)
(72) Inventor: YOU, Choong Beom, 06646 Seoul (KR); SEO, A Ri, 06646 Seoul (KR); HEO, Hun Woo, 06646 Seoul (KR)
(74) Representative: BCKIP Part mbB

(57) **Abstract**

Disclosed is an information processing method of an electronic apparatus including determining communication rules set in relation to a target terminal, and scanning for communication with the target terminal, based on the communication rules, in which the communication rules include a scanning cycle, a first time interval for scanning by the electronic apparatus in each scanning cycle, and a second time interval for data transmission by the target terminal in each scanning cycle, and the second time interval is shorter than the first time interval.

## Description

### CROSS-REFERENCE TO RELATED APPLICATION(S)

This application claims the benefit of Korean Patent Application No. 10-2025-0022969, filed on February 21, 2025, in the Korean Intellectual Property Office.

### FIELD OF THE INVENTION

Example embodiments relate to an apparatus and method for processing information for communication, and more particularly, to an electronic apparatus that scans for communication with a target terminal based on communication rules set in relation to the target terminal, in which the communication rules include a scanning cycle, a first time interval for scanning by the electronic apparatus in each scanning cycle, and a second time interval for data transmission by the target terminal in each scanning cycle, and the second time interval is shorter than the first time interval, and a method thereof.

### BACKGROUND

There is a significant need to detect various physiological parameters (e.g., blood glucose) for disease prevention, diagnosis, and treatment. For example, diabetic patients may inject insulin to maintain blood glucose levels, necessitating blood glucose monitoring during this process. Even for those not yet diagnosed with diabetes, regular blood glucose management can help monitor health status, aiding in health maintenance and disease prevention.

Traditionally, blood-sampling glucose meters were primarily used to measure blood glucose. However, these blood-sampling glucose meters only measure blood glucose at the moment of blood collection, making continuous monitoring somewhat difficult. Additionally, blood glucose levels fluctuate frequently throughout the day, and the burden of blood sampling exists during the process of frequent blood glucose measurements.

Considering the limitations of blood-sampling glucose meters, a continuous glucose monitoring system (CGMS) was developed. To enable more accurate glucose detection through the CGMS, calibration technology for glucose is necessary.

Meanwhile, when performing communication between devices, allocating relatively large resources for communication (e.g., continuous scanning for communication) can increase costs, while allocating fewer resources can increase the likelihood of communication problems. Therefore, a method is needed to perform problem-free communication at a low cost. For example, in communication between multiple devices included in a continuous glucose monitoring system, it is necessary to prevent excessive power consumption and resource consumption by the devices while maintaining the probability of communication problems at a low level.

Furthermore, a method is needed to quickly resolve problems when communication issues occur, enabling normal communication between devices to resume.

In this regard, prior art such as Korean Patent No. 10-2318887B1 or Korean Patent No. 10-2483832B1 may be referenced.

### SUMMARY OF THE INVENTION

An aspect provides an electronic apparatus that determines communication rules set in relation to a target terminal and scans for communication with the target terminal based on the communication rules, in which the communication rules include a scanning cycle, a first time interval for scanning by the electronic apparatus in each scanning cycle, and a second time interval for data transmission by the target terminal in each scanning cycle, and the second time interval is shorter than the first time interval, and a method thereof.

Another aspect also provides a target terminal that identifies communication rules set in relation to an electronic apparatus, and performs a set operation for communication with the electronic apparatus, based on the communication rules, in which the communication rules include an execution cycle of the set operation, a second time interval for data transmission by the target terminal in each execution cycle of the set operation, and a first time interval for scanning by the electronic apparatus in each execution cycle of the set operation, and the second time interval is shorter than the first time interval.

The technical aspects of the present disclosure are not limited to those mentioned above, and other technical aspects can be inferred from the following example embodiments.

According to an aspect, there is provided an information processing method of an electronic apparatus including determining communication rules set in relation to a target terminal, and scanning for communication with the target terminal, based on the communication rules. The communication rules include a scanning cycle, a first time interval for scanning by the electronic apparatus in each scanning cycle, and a second time interval for data transmission by the target terminal in each scanning cycle, and the second time interval is shorter than the first time interval.

According to an example embodiment, the scanning for communication with the target terminal may include determining whether a timepoint of scanning satisfies a preset first condition, when the timepoint of scanning satisfies the first condition, receiving target data through scanning, and, when the timepoint of scanning does not satisfy the first condition, checking whether there is an error with communication with the target terminal through scanning.

According to an example embodiment, the first condition may include a condition that, when each scanning cycle is listed in chronological order based on a scanning history performed for communication with the target terminal, the timepoint falls within the scanning cycle of an order corresponding to a multiple value of a set number.

According to an example embodiment, the target data may include data related to health status of a user associated with the target terminal, acquired by the target terminal.

According to an example embodiment, the scanning for communication with the target terminal may include determining whether a timepoint of scanning satisfies a preset second condition, and, when the timepoint of scanning satisfies the second condition, scanning during a third time interval.

According to an example embodiment, the third time interval may be longer than the first time interval.

According to an example embodiment, the second condition may include a condition that the timepoint falls within an initial scanning cycle, satisfying set criteria, for communication with the target terminal.

According to an example embodiment, the scanning for communication with the target terminal may further include one or more of transmitting the communication rules to the target terminal through scanning when the timepoint satisfies the second condition, and receiving communication rules, identified by the target terminal, from the target terminal through scanning when the timepoint satisfies the second condition.

According to an example embodiment, the information processing method may further include identifying that there is a problem in communication with the target terminal, and performing continuous scanning regardless of the communication rules. A termination condition for the continuous scanning may include a condition of identifying that the problem in communication with the target terminal has been resolved.

According to an example embodiment, the termination condition for the continuous scanning may further include a condition that a fourth time interval elapses since initiation of the continuous scanning.

According to an example embodiment, the information processing method may further include providing a user interface which includes a function to resume scanning for communication with the target terminal when the continuous scanning is terminated upon elapsing of the fourth time interval.

According to an example embodiment, the information processing method may further include identifying that the fourth time interval has elapsed since initiation of the continuous scanning, and scanning for communication with the target terminal after elapsing of the fourth time interval, based on new communication rules. The new communication rules may include a new scanning cycle and a new time interval for scanning in each scanning cycle.

According to an example embodiment, the new scanning cycle and the new time interval may be determined based on elapsed time since the initiation of the continuous scanning.

According to another aspect, there is provided an electronic apparatus for processing information including a transceiver, a memory configured to store instructions, and a processor. The processor is connected to the transceiver and the memory and is configured to determine communication rules set in relation to a target terminal, and scanning for communication with the target terminal, based on the communication rules. The communication rules include a scanning cycle, a first time interval for scanning by the electronic apparatus in each scanning cycle, and a second time interval for data transmission by the target terminal in each scanning cycle, and the second time interval is shorter than the first time interval.

According to yet another aspect, there is provided an information processing method of a target terminal including identifying communication rules set in relation to an electronic apparatus, and performing a set operation for communication with the electronic apparatus, based on the communication rules. The communication rules include an execution cycle of the set operation, a second time interval for data transmission by the target terminal in each execution cycle of the set operation, and a first time interval for scanning by the electronic apparatus in each execution cycle of the set operation, and the second time interval is shorter than the first time interval.

According to an example embodiment, the performing of the set operation for communication with the electronic apparatus may include determining whether a timepoint of performing the set operation satisfies a preset third condition, when the timepoint satisfies the third condition, transmitting target data through the set operation, and, when the timepoint does not satisfy the third condition, transmitting data for checking whether there is an error with communication with the electronic apparatus through the set operation.

According to an example embodiment, the third condition may include a condition that, when each execution cycle of the set operation is listed in chronological order based on a history of performing the set operation for communication with the electronic apparatus, the timepoint falls within the cycle of an order corresponding to a multiple value of a set number.

According to an example embodiment, the performing of the set operation for communication with the electronic apparatus may include determining whether a timepoint of performing the set operation satisfies a preset fourth condition, and, when the timepoint satisfies the fourth condition, performing the set operation during a fifth time interval.

According to an example embodiment, the fifth time interval may be longer than the second time interval.

According to an example embodiment, the fourth condition may include a condition that the timepoint falls within an initial execution cycle of the set operation satisfying set criteria for communication with the electronic apparatus.

According to an example embodiment, the performing of the set operation for communication with the electronic apparatus may further include one or more of transmitting the communication rules to the electronic apparatus through the set operation when the timepoint satisfies the fourth condition, and receiving communication rules determined by the electronic apparatus from the electronic apparatus through the set operation when the timepoint satisfies the fourth condition.

According to still another aspect, there is provided a target terminal for processing information including a transceiver, a memory configured to store instructions, and a processor. The processor is connected to the transceiver and the memory and is configured to identify communication rules set in relation to an electronic apparatus, and perform a set operation for communication with the electronic apparatus, based on the communication rules. The communication rules include an execution cycle of the set operation, a second time interval for data transmission by the target terminal in each execution cycle of the set operation, and a first time interval for scanning by the electronic apparatus in each execution cycle of the set operation, and the second time interval is shorter than the first time interval.

Specific details of other example embodiments are included in the detailed description and drawings.

### BRIEF DESCRIPTION OF THE DRAWINGS

These and/or other aspects, features, and advantages of the disclosure will become apparent and more readily appreciated from the following description of example embodiments, taken in conjunction with the accompanying drawings of which:
FIG. 1 is a schematic configuration diagram illustrating a system for acquiring blood glucose values, blood glucose data, or sensor data according to an example embodiment;
FIG. 2 is an operational flowchart illustrating a method for acquiring data associated with a user's blood glucose according to an example embodiment;
FIG. 3 is a schematic configuration diagram illustrating a system for processing information according to an example embodiment;
FIG. 4 is an operational flowchart illustrating operations for processing information by an electronic apparatus according to an example embodiment;
FIG. 5 is an operational flowchart illustrating operations for processing information by a target terminal according to an example embodiment;
FIG. 6 is a diagram for exemplarily illustrating a scanning method of an electronic apparatus and a method for a target terminal to perform a set operation, according to an example embodiment;
FIG. 7 is a diagram for exemplarily illustrating a case where the timepoint at which an electronic apparatus scans satisfies the second condition and the timepoint at which a target terminal performs a set operation satisfies the fourth condition, according to an example embodiment;
FIG. 8 is a diagram for exemplarily illustrating a case where a communication problem occurs between an electronic apparatus and a target terminal according to an example embodiment;
FIG. 9 is a diagram for exemplarily illustrating a user interface which includes a function for resuming scanning for communication with a target terminal according to an example embodiment; and
FIG. 10 is an exemplary diagram of a configuration of an electronic apparatus according to an example embodiment.

### DETAILED DESCRIPTION OF EXEMPLARY EMBODIMENTS

The terms used in example embodiments have been selected as general terms that are currently widely used as possible while taking functions in the present disclosure into consideration, but these may vary according to the intention of those skilled in the art, a precedent, the emergence of new technologies, and the like. In addition, in certain cases, there are terms arbitrarily selected by the applicant, and in this case, the meaning will be described in detail in the corresponding description. Therefore, the terms used in the present disclosure should be defined based on the meaning of the term and the whole contents of the present disclosure, not just the name of the term.

Throughout the specification, when it is stated that a part "comprises" or "includes" a certain component, it means that other components may further be included, and it does not preclude other components, unless otherwise stated. In addition, terms such as "...part", "...module", and the like described in the present specification mean a unit for performing at least one function or operation, which may be implemented as hardware or software, or as a combination of hardware and software.

The expression "at least one of A, B, and C" may indicate the following meaning including: A alone; B alone; C alone; both A and B together; both A and C together; both B and C together; or all three of A, B, and C together.

The "terminal" mentioned herein may be implemented as a computer or a portable terminal that can access a server or other terminal through a network. Here, the computer includes, for example, a notebook, a desktop, a laptop, and the like, equipped with a web browser, and the portable terminal is, for example, a wireless communication device that guarantees portability and mobility, which may include all kinds of handheld-based wireless communication device including communication-based terminals such as IMT (International Mobile Telecommunication), CDMA (Code Division Multiple Access), W-CDMA (W-Code Division Multiple Access), LTE (Long Term Evolution), smartphones, tablet PCs, and the like.

In the following, with reference to the accompanying drawings, example embodiments of the present disclosure will be described in detail so that those of skilled in the art to which the present disclosure pertains may easily implement them. However, the present disclosure may be implemented in various different forms and is not limited to the example embodiments described herein.

Hereinafter, example embodiments of the present disclosure will be described in detail with reference to the drawings.

Detailed descriptions of technical specifications well-known in the art and unrelated directly to the present disclosure may be omitted. This aims to make the subject matter of the present disclosure clearer without obscuring them by omitting unnecessary explanations.

For the same reason, some elements are exaggerated, omitted, or simplified in the drawings and, in practice, the elements may have sizes and/or shapes different from those shown in the drawings. Throughout the drawings, the same or equivalent parts are indicated by the same reference numbers

Advantages and features of the present disclosure and methods of accomplishing the same may be understood more readily by reference to the following detailed description of example embodiments and the accompanying drawings. The present disclosure may, however, be embodied in many different forms and should not be construed as being limited to the example embodiments disclosed hereinafter. Rather, these example embodiments are provided so that this disclosure will be thorough and complete and will fully convey the concept of the disclosure to those skilled in the art, and the present disclosure will only be defined by the appended claims. Like reference numerals refer to like elements throughout the specification.

It will be understood that each block of the flowcharts and/or block diagrams, and combinations of blocks in the flowcharts and/or block diagrams, can be implemented by computer program instructions. These computer program instructions may be provided to a processor of a general-purpose computer, special purpose computer, or other programmable data processing apparatus, such that the instructions which are executed via the processor of the computer or other programmable data processing apparatus create means for implementing the functions/acts specified in the flowcharts and/or block diagrams. These computer program instructions may also be stored in a non-transitory computer-readable memory that can direct a computer or other programmable data processing apparatus to function in a particular manner, such that the instructions stored in the non-transitory computer-readable memory produce articles of manufacture embedding instruction means which implement the function/act specified in the flowcharts and/or block diagrams. The computer program instructions may also be loaded onto a computer or other programmable data processing apparatus to cause a series of operational steps to be performed on the computer or other programmable apparatus to produce a computer implemented process such that the instructions which are executed on the computer or other programmable apparatus provide steps for implementing the functions/acts specified in the flowcharts and/or block diagrams.

Furthermore, the respective block diagrams may illustrate parts of modules, segments, or codes including at least one or more executable instructions for performing specific logic function(s). Moreover, it should be noted that the functions of the blocks may be performed in a different order in several modifications. For example, two successive blocks may be performed substantially at the same time, or may be performed in reverse order according to their functions.

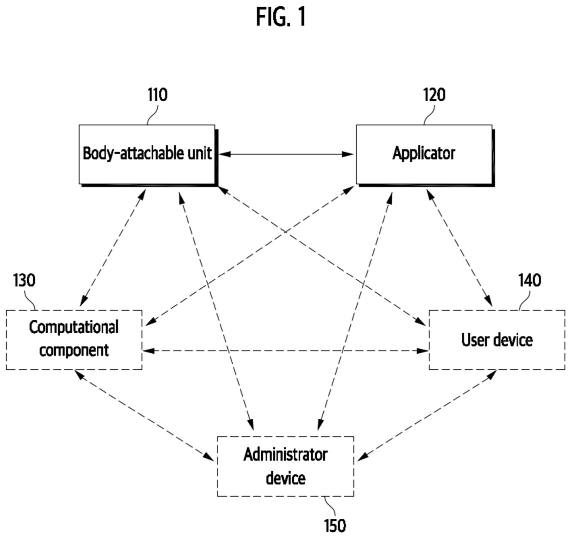

FIG. 1 is a schematic configuration diagram illustrating a system for acquiring blood glucose values, blood glucose data, or sensor data according to an example embodiment.

According to various example embodiments, the blood glucose value acquisition system includes a body-attachable unit 110 and an applicator 120. According to an example embodiment, the blood glucose value acquisition system may further include one or more of a computational component 130, a user device 140, and an administrator device 150. The blood glucose value acquisition system according to an example embodiment may further include a network supporting information transmission between at least some of the body-attachable unit 110, the applicator 120, the computational component 130, the user device 140, the administrator device 150, and an external device.

The body-attachable unit 110, applicator 120, user device 140, and administrator device 150 may each include memory and a processor, and may further include a transceiver. Furthermore, the body-attachable unit 110, applicator 120, computational component 130, user device 140, and administrator device 150 each represent a unit that handles at least one function or operation, which may be implemented by hardware, software, or a combination of hardware and software.

Meanwhile, throughout example embodiments, the body-attachable unit 110, applicator 120, computational component 130, user device 140, and administrator device 150 are each referred to as separate devices, servers, or components; however, these may be logically partitioned structures, and at least some of them may be implemented by separate functions within a single device or server. For example, throughout the present disclosure, the computational component 130 and the user device 140 may be implemented by a single device. In this case, at least some of the processes for transmitting and receiving information between the computational component 130 and the user device 140 may be understood as processes where data is actually exchanged within a single device. Furthermore, the user device 140 and the administrator device 150 may be implemented by a single device. In this case, information including the user's sensor data may be transmitted and received via a server or cloud, but this is not limited thereto. As another example, the computational component 130, which may include at least one of hardware and software, may be incorporated into the body-attachable unit 110 (e.g., by downloading software corresponding to the computational component 130 to the body-attachable unit 110 via a web or app store, etc.) or coupled to the body-attachable unit 110 (e.g., via interconnection through a USB port, etc.). In another example, the computational component 130 may also be implemented as hardware or software of an external device.

According to an example embodiment, the body-attachable unit 110, applicator 120, computational component 130, user device 140, and administrator device 150 may include a plurality of computer systems or computer software implemented as a network server. For example, the body-attachable unit 110, applicator 120, computational component 130, user device 140, and administrator device 150 may each refer to a computer system and computer software connected to a sub-device capable of communicating with other network servers via a computer network such as an intranet or Internet, receiving requests to perform tasks, performing the tasks accordingly, and providing the results of such tasks. Additionally, at least one of the body-attachable unit 110, applicator 120, computational component 130, user device 140, and administrator device 150 may be understood in a broad sense as including a series of applications operable on a network server and various databases established internally or on other connected nodes. For example, at least one of the body-attachable unit 110, applicator 120, computational component 130, user device 140, and administrator device 150 may be implemented using network server programs provided for various operating systems such as DOS, Windows, Linux, UNIX, or MacOS.

Meanwhile, for convenience of description, each operational entity has been referred to as the body-attachable unit 110, applicator 120, user device 140, and administrator device 150. However, these should be understood as comprehensive forms of devices that may correspond to, include, or be contained within various types of devices, such as computer devices and mobile communication terminals.

The body-attachable unit 110 is a device that processes and provides various pieces of information and may include a sensor, at least a portion of which is inserted into the user's body. The sensor may be initially provided to the user in a state combined with the body-attachable unit 110, or it may be initially provided to the user in a state separated from the body-attachable unit 110 and subsequently combined with the body-attachable unit 110 through manipulation by the user or the applicator 120. The body-attachable unit 110 attaches to the user's body and may perform various tasks based on the user's body fluids, such as acquiring blood glucose or sensor data from the sensor. The user's body fluid for the body-attachable unit 110 to perform tasks like acquiring blood glucose values may include interstitial fluid, but the method of this disclosure is not limited thereto. According to the method of the present disclosure, since the body-attachable unit 110 remains attached to the user's body, blood glucose value acquisition may be performed at shorter intervals compared to conventional methods requiring blood sample collection from the user.

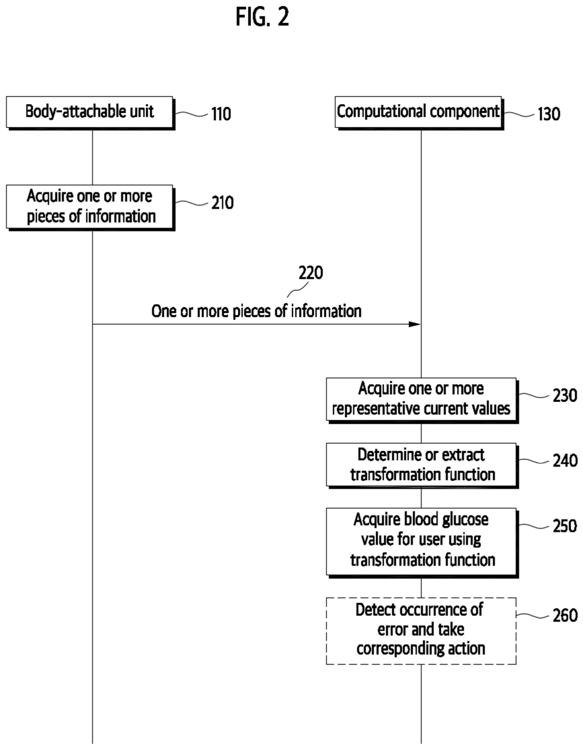

The body-attachable unit 110 according to an example embodiment may acquire one or more pieces of information and, based on the one or more pieces of information, acquire data associated with the user's blood glucose value (as will be described later in FIG. 2, the operation of calculating the blood glucose value may be performed by the computational component 130, or the body-attachable unit 110 may perform some of the operations while the computational component 130 performs the remaining operations, among other variations concerning the entity performing the operations, which may fall within the scope of the present disclosure). The one or more pieces of information acquired by the body-attachable unit 110 may include a current value measured based on the interstitial fluid in contact with the sensor. According to a more specific example, an enzyme present in a sensor included in the body-attachable unit 110 reacts with glucose present in the user's interstitial fluid (more specifically, glucose diffused in the direction of the interstitial fluid), causing electrons to be emitted, and the body-attachable unit 110 may acquire a current value based on the emitted electrons. Specific operations for acquiring a current value based on the emitted electrons may include acquiring a digital signal based on the emitted electrons and sampling the digital signal, but the scope of the present disclosure is not limited thereto.

The applicator 120 may include a function to assist the body-attachable unit 110 in attaching to the user's body. For example, with the body-attachable unit 110 inserted inside the applicator 120, activating the applicator 120 may cause the body-attachable unit 110 to be ejected outward or downward. Performing this outward ejection function toward the user's skin enables the body-attachable unit 110 to attach to the user's body. The applicator 120 according to an example embodiment may include one or more of a plunger, a needle, a needle withdrawal means, and a spring. Based on at least one of the needle and the needle withdrawal means, the sensor of the body-attachable unit 110 may be more readily inserted into the user's skin. However, the specific method of using the applicator 120 is merely one example of the present disclosure and does not limit the scope of the present disclosure.

The computational component 130 may be a component operated and managed by various entities. The various entities may include one or more of the aforementioned "user" and those involved in the development of the program, but are not limited thereto. For example, the entities using the computational component 130 may include technicians, researchers, medical personnel, and caregivers who monitor the process of acquiring blood glucose values.

The computational component 130 may be implemented as software. For example, the computational component 130 may correspond to a program (e.g., an application) whose functions are performed within the body-attachable unit 110 or a program whose functions are performed within the user device 140. However, the computational component 130 of the present disclosure need not necessarily be implemented solely as software. Various example embodiments may fall within the scope of the present disclosure, such as implementation through a combination of hardware and software (more specifically, a device performing software functions).

The computational component 130 may interact with a subject such as a user or with a device such as the body-attachable unit 110 and may perform further operations associated therewith. For example, the computational component 130 may receive a current value from the body-attachable unit 110 and obtain a specific blood glucose value based on the received current value. Furthermore, the computational component 130 may determine or extract a transformation function used to obtain the blood glucose value.

The user device 140 may be a device operated and managed by various entities. These various entities may include, but are not limited to, the aforementioned "user."

The user device 140 may interact with the user or other entities, or interact with devices such as the body-attachable unit 110, and may perform additional actions associated therewith. For example, the user device 140 may provide the user with blood glucose values or blood glucose data (e.g., display via a screen). Additionally, the user device 140 may provide the user with alarms, warnings, or instructions related to the blood glucose value, and may receive feedback or commands from the user related to the blood glucose value (e.g., receive a touch input). Furthermore, the user device 140 may transmit feedback or commands to the body-attachable unit 110.

According to an example embodiment, the computational component 130 is implemented as software, and the function of such software may be executed on the user device 140. Furthermore, to enable the software's functions to run on the user device 140 in this manner, the computational component 130 may be included in the user device 140 (e.g., by downloading software corresponding to the computational component 130 to the user device 140 via a path such as a web or app store) or coupled with the user device 140 (e.g., through interconnection via a USB port, etc.).

The administrator device 150 may be a device operated and managed by various entities. The various entities may include, but are not limited to, one or more of medical personnel managing the user's health and a guardian of the user of the body-attachable unit 110. For example, depending on example embodiments, the entity operating and managing the administrator device 150 may also include technicians and researchers who manage the process of acquiring blood glucose values.

The administrator device 150 may interact with entities such as the administrator or with devices such as the user device 140, and may perform additional operations associated therewith. For example, the administrator device 150 may acquire management information based on the administrator's input and provide the acquired management information to the user device 140. Furthermore, the administrator device 150 may provide information obtained from the computational component 130 or the user device 140 to the administrator (e.g., display via a screen).

A more detailed description of the operation of the body-attachable unit 110 and the computational component 130 is provided later in FIG. 2.

The body-attachable unit 110, applicator 120, user device 140, and administrator device 150 may include computer devices, mobile communication terminals, servers, etc. The body-attachable unit 110, applicator 120, user device 140, and administrator device 150 may include input devices such as a touchpad, mouse, or keyboard for receiving input, or may be connected to such input devices. Additionally, the body-attachable unit 110, applicator 120, user device 140, and administrator device 150 may include output devices such as screens, speakers, or interface devices for providing information to the user, or may be connected to output devices. Furthermore, the input and output devices of the body-attachable unit 110, applicator 120, user device 140, and administrator device 150 may be integrated or interconnected. For example, an interface for receiving input may be displayed on at least one of the body-attachable unit 110, the applicator 120, the user device 140, and the administrator device 150.

The operations associated with a series of information provision methods according to various example embodiments may be implemented by a single physical device or by a plurality of physical devices organically combined. For example, some components included in the blood glucose value acquisition system may be implemented by one physical device, while the remaining components may be implemented by another physical device. For instance, one physical device may be implemented as part of the body-attachable unit 110, while another physical device may be implemented as part of the applicator 120 or part of another external device. In some cases, each component included in the blood glucose value acquisition system may be distributed and deployed on different physical devices. These distributed components may be organically combined to implement the functions and operations of the blood glucose value acquisition system. For example, the body-attachable unit 110 described herein may include at least one sub-device, and some operations described as being performed by the body-attachable unit 110 may be performed by a first sub-device, while other operations may be performed by a second sub-device.

FIG. 2 is an operational flowchart illustrating a method for acquiring data associated with a user's blood glucose according to an example embodiment.

In the description related to FIG. 2 below, when the body-attachable unit 110 acquires a current value and transmits it to the computational component 130, the computational component 130 may obtain a specific blood glucose value based on the acquired current value. However, in interpreting this description, the operations of the "computational component 130" should not necessarily be understood as being performed by a device separate from the "body-attachable unit 110." As described in FIG. 1, the computational component 130 according to an example embodiment may be included within or coupled to the body-attachable unit 110, and in such an example embodiment, it can be understood that the body-attachable unit 110 itself directly or indirectly performs at least some of the operations of reference numerals 230 to 250. That is, according to an example embodiment, the body-attachable unit 110 may perform at least some of the operations of acquiring one or more pieces of information, acquiring one or more representative current values, determining or extracting a transformation function, and acquiring a blood glucose value for the user using the transformation function. Furthermore, when the body-attachable unit 110 performs at least some of the operations of reference numerals 230 to 250 in this manner, depending on example embodiments, the operation of transmitting one or more pieces of information in reference numeral 220 may be understood as a process where data is exchanged within the body-attachable unit 110 or as a process where data is exchanged between interconnected devices. Furthermore, in some example embodiments, it may be understood that the operation of reference numeral 220 may be omitted.

Of course, the following description can be interpreted as a description encompassing various example embodiments, including an example embodiment where at least some of the operations of reference numerals 230 to 250 are performed directly or indirectly by the user device 140 (e.g., an example embodiment where the body-attachable unit 110 acquires and transmits one or more pieces of information and the user device 140 acquires a representative current value, determines or extracts a transformation function, and acquires a blood glucose value for the user) and an example embodiment where at least some of the operations of reference numerals 230 to 250 are performed by the computational component 130 implemented to include independent hardware, in addition to an example embodiment where at least some of the operations of reference numerals 230 to 250 are performed directly or indirectly by the body-attachable unit 110.

The body-attachable unit 110 may acquire one or more pieces of information (210). The one or more pieces of information according to an example embodiment may include a current value acquired from a sensor coupled to the body-attachable unit.

The body-attachable unit 110 may transmit the one or more pieces of information to the computational component 130 (220). According to an example embodiment, the body-attachable unit 110 may transmit the acquired current values to the computational component 130 whenever the number of acquired current values reaches a predetermined number. For example, the body-attachable unit 110 may transmit to the computational component 130 whenever the number of measured current values reaches a specific number (e.g., any number within a range of one to thirty). According to another example embodiment, the body-attachable unit 110 may transmit the acquired current values to the computational component 130 at regular time intervals. For example, the body-attachable unit 110 may transmit the acquired current values to the computational component 130 at a specific time interval (e.g., any value within a time range of 10 seconds to 5 minutes). According to another example embodiment, the body-attachable unit 110 may convert the acquired current values obtained from the sensor into blood glucose data without transmitting the acquired current values to the computational component 130 or an external device. In this case, the body-attachable unit 110 transmits the converted blood glucose data to the computational component 130 or an external device, and the computational component 130 or external device may output the received blood glucose data for display to the user or others.

The computational component 130 may acquire one or more representative current values based on the current values received from the body-attachable unit 110 (230). For example, the computational component 130 may perform a first operation to calibrate the received current values, a second operation that excludes the values that satisfy the preset conditions among the current values calibrated by the first operation, classifies the remaining values into one or more groups according to another preset standard, and calculates the average of the current values for each group, and a third operation that performs sampling on one or more average values to obtain representative current values. Examples of various techniques used by the computational component 130 to perform the first operation include preprocessing, z-scope transformation, scaling, and regression. Examples of "preset conditions" may include conditions for excluding current values that are excessively large or small from the averaging calculation. Examples of one or more groups may include groups for classifying current values based on specific time intervals (e.g., 10 seconds, 1 minute, 5 minutes) relative to the time each current value was acquired.

The computational component 130 may determine or extract a transformation function (240). The operation of the computational component 130 determining or extracting the transformation function, denoted by reference numeral 240, may include, but is not limited to, operations such as acquiring the transformation function. There may be various example embodiments such as loading an already acquired transformation function from memory or selecting one transformation function for use this time from among a plurality of already acquired transformation functions.

The transformation function according to an example embodiment may correspond to a linear function such as y = Ax + B. The transformation function may be obtained from a regression equation, which in this case may represent the relationship between the sensor signal and blood glucose data. Specifically, the regression equation may include a function representing the sensor's sensitivity to blood glucose values. The regression equation may be obtained before wearing the sensor, but is not limited thereto.

In the transformation function y = Ax + B obtained from the regression equation, x may represent data obtained from the sensor (including current values), and y may represent estimated or acquired blood glucose data. A is a value indicating how sensitively the blood glucose data changes in response to changes in the sensor signal, which may be referred to as "sensitivity" hereinafter. B is a value indicating the blood glucose level when the current value is zero, which may be referred to as the "offset" or "baseline" hereinafter.

For ease of explanation, an example embodiment where the representative current value and blood glucose value have a linear relationship (i.e., the transformation function corresponds to y = Ax + B) is described below; however, the scope of this disclosure is not necessarily limited to this. For example, the following descriptions may also apply when the transformation function is *y* = *cx*² *+ dx + e,* and in this case, the description of determining or calibrating the sensitivity and offset may be interpreted as extending to the operation of determining or calibrating the values of c, d, and e.

According to an example embodiment related to the operation of reference numeral 240 in which the computational component 130 determines or extracts the transformation function, the computational component 130 may identify a reference blood glucose value and determine or extract the transformation function based on the identified reference blood glucose value. The "reference blood glucose value" may be a single value or may include multiple values.

The "reference blood glucose value" may include a blood glucose value identified based on a blood sample collected from the user. The blood glucose value identified based on the blood sample collected from the user may be automatically acquired by the body-attachable unit 110, the user device 140, or the administrator device 150, or may be directly input by the user, administrator, or other entity. In another example embodiment, the "reference blood glucose value" may further include pre-acquired blood glucose data or may be acquired based on pre-acquired information. The "pre-acquired blood glucose data" may include, for example, data acquired during a pre-calibration process at the factory or in vitro, and may include data acquired from sensor data after wearing the sensor. The pre-acquired information may include, but is not limited to, pre-acquired blood glucose data. Depending on example embodiments, it may also include one or more of pre-acquired current data, information analyzing the relationship between the pre-acquired blood glucose data and the current data (e.g., sensitivity or transformation function information), and information about the environment associated with the pre-acquired blood glucose data.

In this manner, by determining sensitivity and offset based on the reference blood glucose value, the accuracy of the blood glucose value obtained based on the representative current value may be improved.

However, the example embodiment where the computational component 130 determines or extracts the transformation function using the reference blood glucose value should not be interpreted as being limited to an example embodiment where "the transformation function is determined or extracted using only the reference blood glucose value." For example, the transformation function or sensitivity value may already exist before the computational component 130 uses the reference blood glucose value, and the computational component 130 may then modify the existing transformation function or sensitivity value using the reference blood glucose value to enable more accurate acquisition of the blood glucose value (alternatively, the sensitivity value may be maintained while determining or modifying the offset value). In this case, the existing transformation function or sensitivity value may already be stored in the computational component 130 or may be received from the body-attachable unit 110 (in this case, the existing transformation function or sensitivity value may be included in the "one or more pieces of information" of reference numeral 210). Meanwhile, the existing transformation function or sensitivity value may include a transformation function or sensitivity value previously generated based on one or more of in vitro data, which analyzes the relationship between current values and blood glucose values through experiments, and in vivo data, which analyzes the relationship between current values measured based on interstitial fluid in the actual body and actual blood glucose values.

According to another example embodiment related to the operation of reference numeral 240, in which the computational component 130 determines or extracts the transformation function, the computational component 130 may determine or extract the transformation function without identifying a reference blood glucose value. For example, the computational component 130 may acquire multiple drift profiles that predict correlations between various in vitro data and in vivo data beforehand, identify a drift profile to be used for acquiring the user's blood glucose value, and determine or extract the transformation function based on the identified drift profile. As a more specific example, multiple drift profiles are generated by predicting the correlation between various in vitro data obtained from experiments conducted in different environments (e.g., dipping the body-attachable unit 110 into solutions with different properties) and in vivo data, a drift profile, among the multiple drift profiles generated, with a high degree of similarity to the environment in which the body-attachable unit 110 is attached to the user's body and the current value is measured is identified, and the computational component 130 may then determine or extract the transformation function accordingly. Furthermore, a single drift profile may be generated based on at least one of the in vivo data and in vitro data acquired from the experimental results, and the computational component 130 may determine or extract the transformation function using this single drift profile. The drift profile may include characteristics of the sensor that vary depending on the user and the sensor's environment, but is not limited thereto.

Meanwhile, the process of acquiring a single or multiple drift profiles may be performed by an external device, and the information about the environment where the body-attachable unit 110 is attached to the user's body and current values are measured may be received from the body-attachable unit 110 (in this case, the environmental information may be included in the "one or more pieces of information" of reference numeral 210), but the scope of the present disclosure is not necessarily limited thereto.

According to one example, the computational component 130 may further acquire a drift correction factor to compensate for changes in the environment where the body-attachable unit 110 is attached to the user's body and current values are measured, and may appropriately modify the transformation function to correspond to the predicted environmental changes. Here, "environment" can be understood to include the environment of the user's body (e.g., skin temperature, temperature of internal body fluids, composition of body fluids, etc.). Furthermore, depending on example embodiments, "environment" may additionally include external environments that can affect the user's body (e.g., external temperature, humidity, pressure, light, etc.).

Additionally, such environmental changes may include changes in the user's physical environment resulting from the attachment and insertion of the body-attachable unit 110 onto the user's body. More specifically, the drift correction factor may include correction information reflecting the presence of foreign matter predicted to adhere to the body-attachable unit 110 after it is inserted into the user's body and a certain period of time has elapsed.

Furthermore, the drift correction factor may be obtained by modifying or correcting a drift profile, in which the process of modifying or correcting the drift profile may be based on at least one of factory data, in vitro data, in vivo data, and data obtained from blood samples (such as user input data during sensor use). Moreover, the drift correction factor may be obtained from the drift profile, and the obtained drift correction factor may be used to determine or extract the transformation function, but is not limited thereto. Furthermore, the process of determining or extracting the transformation function using the drift profile may utilize at least one of a reference blood glucose value input by the user (more specifically, which may include blood glucose data extracted from body fluids) and pre-acquired information (more specifically, which may include data extracted at the factory or in vitro data).

Depending on example embodiments, the drift profile and drift correction factor may be used to determine one or more of the sensitivity and offset, or to correct one or more of the existing sensitivity and offset, and the specific method of use does not limit the scope of the present disclosure.

According to a specific example of the process for determining the transformation function described above, the computational component 130 may receive a set of measured analyte values (which may include not only reference blood glucose values, but also various in vitro and in vivo data, depending on example embodiments). Furthermore, the computational component 130 according to an example may determine parameters for a forward filter, a backward filter, or both using a representative set or a subset of the measured analyte values. Seed values associated with the parameters may be determined using one or more of intermediate signal values and drift values (e.g., drift correction factors). Both the forward and backward filters may be used, and the method may further include optimizing the seed values associated with the parameters to minimize the mean squared error between the two signal filters. Furthermore, the computational component 130 according to an example may adjust the sensitivity and offset according to a signal-based calibration algorithm, in which the signal-based calibration algorithm may use the signal average from the forward and backward filters and the raw sensor signals. In this regard, the computational component 130 may also adjust sensitivity and offset based on one or more criteria. According to an example embodiment, these criteria may include a criterion that the average glucose value should match the expected diabetes average. According to an example embodiment, these criteria may also include a criterion that the glucose variability based on continuous glucose measurements should match the average glucose level.

In connection with the present disclosure, when the term "calibration" is used, the operation referred to by that term may be understood to broadly encompass the operations of reference numerals 230 through 250. However, in some example embodiments, calibration may refer specifically to the operation of reference numeral 240. Furthermore, when specific descriptions within this disclosure define "calibration" differently, the interpretation provided by those specific descriptions may take precedence.

The computational component 130 may acquire a blood glucose value for the user using the acquired transformation function (250). When the transformation function corresponds to y = Ax + B, the computational component 130 may obtain a y-value by inputting a representative current value for x, and the acquired y-value may be determined as the blood glucose value.

Depending on example embodiments, the computational component 130 may further calibrate the acquired y-value to ultimately obtain the blood glucose value. For example, the computational component 130 may adjust which point in time the acquired blood glucose value indicates by correcting for the time lag between when glucose is present in the blood and when glucose diffused toward the interstitial fluid reacts to release electrons. The diffusion time is related to the diffusion distance according to t = x²/(2D), where t is the diffusion time, x is the diffusion distance, and D may be the mass diffusion coefficient of the analyte of interest. However, the diffusion time is not necessarily calculated solely by this process. Furthermore, a Kalman filter may be used to correct the time lag, but the scope of the present disclosure is not necessarily limited thereto.

According to an example embodiment of the present disclosure, the computational component 130 may detect the occurrence of an error and take a corresponding action (260). Conditions related to detecting an error occurrence include, for example, when the change in current value or blood glucose value exceeds a critical threshold, when the sensor experiences pressure exceeding a critical level (e.g., when the sensor is pressed while the user is sleeping), when moisture penetrates inside the sensor at a level that could cause abnormal operation of the sensor, when the sensor quality is poor, when communication between the sensor and another device is interrupted for longer than a specified time, when the user's blood glucose value falls outside a reference blood glucose range set by the user or administrator, when the sensor's remaining battery is insufficient, or when the administrator or administrator device 150 associated with the user changes. When an error is detected, the action taken by the computational component 130 may include displaying an associated notification (which may include, but is not limited to, displaying a notification matching the error type), stopping or interrupting the screen display on one or more of the user device 140 and the administrator device 150, disconnecting at least some of the body-attachable unit 110, the computational component 130, the user device 140, and the administrator device 150, deactivating at least some of the operations of the body-attachable unit 110, and deactivating at least some of the calibration operations.

Additionally, conditions combining at least some of the examples of conditions related to identifying the occurrence of an error using AND or OR conditions, or conditions combining at least some of the actions taken by the computational component 130 using AND or OR conditions, can also be understood to fall within the scope of the "conditions related to identifying the occurrence of an error" and "actions taken by the computational component 130" as defined herein.

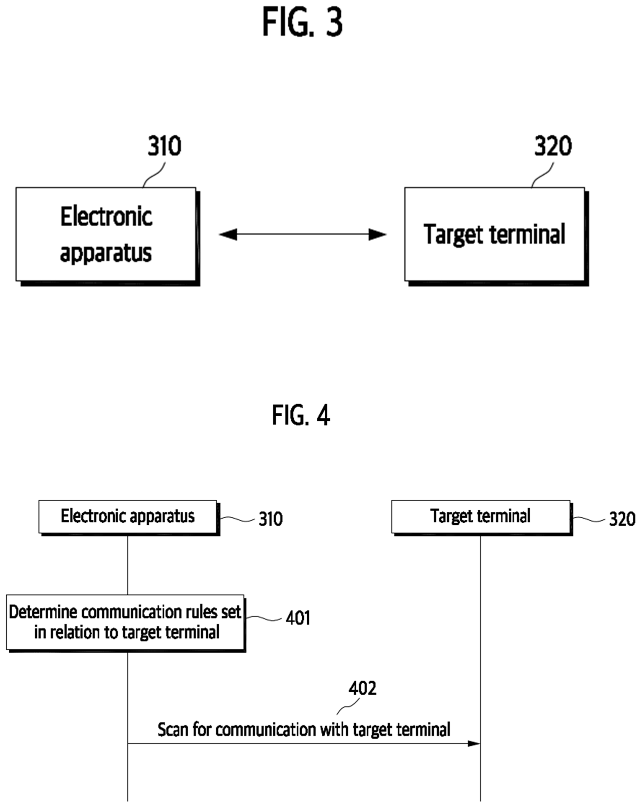

FIG. 3 is a schematic configuration diagram illustrating a system for processing information according to an example embodiment.

According to various example embodiments, a system for processing information includes an electronic apparatus 310 and a target terminal 320. The system for processing information according to an example embodiment may further include a network supporting information transmission and reception between at least some of the electronic apparatus 310, the target terminal 320, and external devices.

The electronic apparatus 310 and the target terminal 320 may each include a transceiver, memory, and a processor. Furthermore, each of the electronic apparatus 310 and the target terminal 320 refers to a unit that handles at least one function or operation, which may be implemented by hardware, software, or a combination of hardware and software.

Throughout example embodiments, the electronic apparatus 310 and the target terminal 320 are each referred to as separate devices, servers, or components; however, they may be logically partitioned structures, and at least some of them may be implemented by separate functions within a single device or server. For example, throughout the present disclosure, the electronic apparatus 310 and the target terminal 320 may be implemented by a single device. In this case, at least some of the processes of communicating and exchanging information between the electronic apparatus 310 and the target terminal 320 may be understood as processes where data is actually exchanged within a single device.

According to an example embodiment, the electronic apparatus 310 and the target terminal 320 may include a plurality of computer systems or computer software implemented as a network server. For example, the electronic apparatus 310 and the target terminal 320 may each refer to a computer system and computer software connected to a sub-device capable of communicating with other network servers via a computer network such as an intranet or Internet, receiving requests to perform tasks, performing the tasks accordingly, and providing the results of such tasks. Additionally, at least one of the electronic apparatus 310 and the target terminal 320 may be understood in a broad sense as including a series of applications operable on a network server and various databases established internally or on other connected nodes. For example, at least one of the electronic apparatus 310 and the target terminal 320 may be implemented using network server programs provided for various operating systems such as DOS, Windows, Linux, UNIX, or MacOS.

In this disclosure, the electronic apparatus 310 may be understood as an example of one or more of the computational component 130, the user device 140, and the administrator device 150. Furthermore, in this disclosure, the target terminal 320 may be understood as an example of the body-attachable unit 110. More specifically, the communication process between the electronic apparatus 310 and the target terminal 320 described herein may correspond to one or more of the communication process between the body-attachable unit 110 and the computational component 130, the communication process between the body-attachable unit 110 and the user device 140, and the communication process between the body-attachable unit 110 and the administrator device 150. However, this is merely one of several example embodiments to which the present disclosure may be applied, and the scope of the present disclosure is not limited thereto.

Meanwhile, for the sake of convenience in explanation, each action entity has been referred to as the electronic apparatus 310 and the target terminal 320. However, these should be understood as comprehensive forms of devices that correspond to various types of devices such as computer devices and mobile communication terminals, or that include various types of devices, or that may be included within various types of devices.

The target terminal 320 is a device that processes and provides various pieces of information and may include a sensor, at least a portion of which is inserted into the user's body. The sensor may be initially provided to the user in a state combined with the target terminal 320, or it may be initially provided to the user in a state separated from the target terminal 320 and subsequently combined with the target terminal 320 through manipulation by the user or the applicator 120. The target terminal 320 attaches to the user's body and may perform various tasks based on the user's body fluids, such as acquiring blood glucose or sensor data from the sensor. The user's body fluid for the target terminal 320 to perform tasks like acquiring blood glucose values may include interstitial fluid, but the method of this disclosure is not limited thereto. According to the method of the present disclosure, since the target terminal 320 remains attached to the user's body, blood glucose value acquisition may be performed at shorter intervals compared to conventional methods requiring blood sample collection from the user.

The target terminal 320 according to an example embodiment may acquire one or more pieces of information and, based on the one or more pieces of information, acquire data associated with the user's blood glucose value (as will be described later in FIG. 2, the operation of calculating the blood glucose value may be performed by the computational component 130, or the target terminal 320 may perform some of the operations while the computational component 130 performs the remaining operations, among other variations concerning the entity performing the operations, which may fall within the scope of the present disclosure). The one or more pieces of information acquired by the target terminal 320 may include a current value measured based on the interstitial fluid in contact with the sensor. According to a more specific example, an enzyme present in a sensor included in the target terminal 320 reacts with glucose present in the user's interstitial fluid (more specifically, glucose diffused in the direction of the interstitial fluid), causing electrons to be emitted, and the target terminal 320 may acquire a current value based on the emitted electrons. Specific operations for acquiring a current value based on the emitted electrons may include acquiring a digital signal based on the emitted electrons and sampling the digital signal, but the scope of the present disclosure is not limited thereto.

The computational component 130 may be a component operated and managed by various entities. The various entities may include one or more of the aforementioned "user" and those involved in the development of the program, but are not limited thereto. For example, the entities using the computational component 130 may include technicians, researchers, medical personnel, and caregivers who monitor the process of acquiring blood glucose values.

The computational component 130 may interact with a subject such as a user or with a device such as the target terminal 320 and may perform further operations associated therewith. For example, the computational component 130 may receive a current value from the target terminal 320 and obtain a specific blood glucose value based on the received current value. Furthermore, the computational component 130 may determine or extract a transformation function used to obtain the blood glucose value.

The electronic apparatus 310 is a device that processes and provides various pieces of information. The electronic apparatus 310 may perform various tasks for processing information. Specifically, the electronic apparatus 310 determines communication rules set in relation to the target terminal 320 and, based on the determineed communication rules, scans for communication with the target terminal 320. In this regard, the communication rules determined by the electronic apparatus 310 include a scanning cycle, a first time interval for scanning by the electronic apparatus 310 in each scanning cycle, and a second time interval for data transmission by the target terminal 320 in each scanning cycle, in which the second time interval is shorter than the first time interval.

The target terminal 320 is a device that processes and provides various pieces of information. The target terminal 320 may perform various tasks for processing information. Specifically, the target terminal 320 identifies communication rules set in relation to the electronic apparatus 310 and, based on the identified communication rules, performs a set operation for communicating with the electronic apparatus 310. In this regard, the communication rules identified by the target terminal 320 include an execution cycle of the set operation, a second time interval for data transmission by the target terminal 320 in each execution cycle of the set operation, and a first time interval for scanning by the electronic apparatus 310 in each execution cycle of the set operation, in which the second time interval is shorter than the first time interval.

As mentioned above, the electronic apparatus 310 according to an example embodiment may be understood as an example of one or more of the computational component 130, user device 140, and administrator device 150, and the target terminal 320 according to an example embodiment may be understood as an example of the body-attachable unit 110. According to a more specific example for better understanding, the electronic apparatus 310 may include a device used by a user with a sensor implanted in their body (e.g., a portable terminal used by the user) or a device used by an administrator associated with a user with a sensor implanted in their body (e.g., the user's guardian). Furthermore, the target terminal 320 may include a sensor inserted into the user's body. However, the scope of the present disclosure is not necessarily limited thereto.

The electronic apparatus 310 may interact with a subject such as a user or with a device such as the target terminal 320, and may further perform operations associated therewith. The target terminal 320 may interact with a subject such as a user or with a device such as the electronic apparatus 310, and may further perform operations associated therewith. For example, communication between the electronic apparatus 310 and the target terminal 320 may occur based on scanning by the electronic apparatus 310 and execution of a set operation by the target terminal 320, and further, data may move unidirectionally or bidirectionally. In another example, the electronic apparatus 310 may transmit communication rules to the target terminal 320, or the electronic apparatus 310 may receive communication rules from the target terminal 320, thereby verifying whether the communication rules acknowledged by both devices are mutually consistent. In another example, the electronic apparatus 310 may provide a user interface to the user (e.g., display via a screen) that includes a function to resume scanning for communication with the target terminal 320.

A more detailed description of the operation of the electronic apparatus 310 and the target terminal 320 is provided later in FIGS. 2 to 9.

The electronic apparatus 310 and the target terminal 320 may include computer devices, mobile communication terminals, servers, etc. The electronic apparatus 310 and the target terminal 320 may include input devices such as a touchpad, mouse, or keyboard for receiving input, or may be connected to such input devices. Additionally, the electronic apparatus 310 and the target terminal 320 may include output devices such as screens, speakers, or interface devices for providing information to the user, or may be connected to output devices. Furthermore, the input and output devices of the electronic apparatus 310 and the target terminal 320 may be integrated or interconnected. For example, an interface for receiving input may be displayed on at least one of the electronic apparatus 310 and the target terminal 320.

The operations associated with a series of information provision methods according to various example embodiments may be implemented by a single physical device or by a plurality of physical devices organically combined. For example, some components included in the system for processing information may be implemented by one physical device, while the remaining components may be implemented by another physical device.

In some cases, each component included in the system for processing information may be distributed and deployed on different physical devices. These distributed components may be organically combined to implement the functions and operations of the system for processing information. For example, the electronic apparatus 310 described herein may include at least one sub-device, and some operations described as being performed by the electronic apparatus 310 may be performed by a first sub-device, while other operations may be performed by a second sub-device.

FIG. 4 is an operational flowchart illustrating operations for processing information by an electronic apparatus according to an example embodiment.

Referring to FIG. 4, the electronic apparatus 310 according to an example embodiment determines communication rules set in relation to the target terminal 320 (401). According to an example embodiment, the electronic apparatus 310 may determine the communication rules stored in the electronic apparatus 310. However, the scope of the present disclosure is not limited thereto. For example, the electronic apparatus 310 may receive information about the communication rules set in relation to the target terminal 320 from an external device, or may set communication rules considering the relationship with the target terminal 320, and various example embodiments may fall within the scope of the present disclosure.

The communication rules determinied by the electronic apparatus 310 include a scanning cycle, a first time interval for scanning by the electronic apparatus 310 in each scanning cycle, and a second time interval for data transmission by the target terminal 320 in each scanning cycle, in which the second time interval is shorter than the first time interval. In this regard, the second time interval for data transmission by the target terminal 320 may be understood as a time interval set to respond to the scanning of the electronic apparatus 310.

For example, the communication rules determined by the electronic apparatus 310 may include a rule where the scanning cycle is 60 seconds, a rule where a specific interval (e.g., 15 seconds from the start point of the scanning cycle) is set as the first time interval for scanning in each scanning cycle, and a rule where a specific interval (e.g., from 5 seconds after the start point of the scanning cycle to 10 seconds after the start point, totaling 5 seconds) is set as the second time interval for the target terminal 320 to transmit data.

According to an example embodiment, the first time interval for scanning may be set to include the second time interval for the target terminal 320 to transmit data, as described later. However, the scope of this disclosure is not necessarily limited thereto.

The electronic apparatus 310 scans for communication with the target terminal 320 based on the determined communication rules (402). The scanning by the electronic apparatus 310 may be understood as a broad concept encompassing various types of operations for communicating with the target terminal 320. According to one example, the scanning performed by the electronic apparatus 310 may include the operation of listening for broadcasts to communicate with other devices. In another example, the scanning performed by the electronic apparatus 310 may include one or more of operation of identifying the presence of the target terminal 320, operation of identifying a channel for communication with the target terminal 320, and operation of preparing to receive data from the target terminal 320. Additionally, various operations for performing communication with the target terminal 320 may be included in the scanning of the present disclosure.

According to an example embodiment related to the operation of reference numeral 402, the electronic apparatus 310 may determine whether the timepoint of scanning satisfies a preset first condition. When the timepoint of scanning satisfies the first condition, the electronic apparatus 310 may receive target data through scanning. When the timepoint of scanning does not satisfy the first condition, the electronic apparatus 310 may check whether there is an error with communication with the target terminal 320 through scanning.

In some example embodiments, the electronic apparatus 310 may transmit information through scanning. For example, the electronic apparatus 310 may transmit information requesting target data via scanning. However, for the sake of convenience, the focus will be on cases where the electronic apparatus 310 receives information via scanning in the following description. Nevertheless, the following description may also be applied mutatis mutandis to cases where the electronic apparatus 310 transmits information via scanning.

According to a more specific example related to the first condition, the first condition may include a condition that, when each scanning cycle is listed in chronological order based on the scanning history performed by the electronic apparatus 310 for communication with the target terminal 320, the "timepoint of scanning" falls within the scanning cycle of an order corresponding to a multiple value of a set number. For example, when each scanning cycle is listed in chronological order, when the "the timepoint of scanning" falls within a scanning cycle of an order corresponding to a multiple value of 5, the electronic apparatus 310 receives the target data, and when it falls within a scanning cycle of an order not corresponding to a multiple value of 5, the electronic apparatus 310 may check whether there is an error with communication with the target terminal 320 through scanning.

The operation of checking whether there is an error with communication may include, but is not limited to, checking whether the channel for communication with the target terminal 320 is in a normal state. For example, even when checking whether there is an error with communication, the electronic apparatus 310 may be able to receive data from the target terminal 320, and in this case, the received data may be understood as data transmitted to check whether the communication status is normal.

Meanwhile, with respect to the specific method for listing each scanning cycle in chronological order, each scanning attempt (regardless of communication being successful or not) may be counted as one scanning cycle, each successful communication with the target terminal 320 via scanning may be counted as one scanning cycle, it may be possible to ignore the failed cycle and all preceding scanning cycles when communication with the target terminal fails even once, and start counting anew from the next successful communication as the first scanning cycle, and various other example embodiments may fall within the scope of the present disclosure.

Target data according to an example implementation may include data related to the health status of a user associated with the target terminal 320, acquired by the target terminal 320. For example, when the target terminal 320 corresponds to the body-attachable unit 110 including a sensor inserted into the user's body, the target data may include health status data of the user measured by the sensor. Furthermore, depending on example embodiments, the target data may also include data further processed based on the measured data (e.g., blood glucose data calculated based on the current value measured by the sensor), and various example embodiments may fall within the scope of the present disclosure.

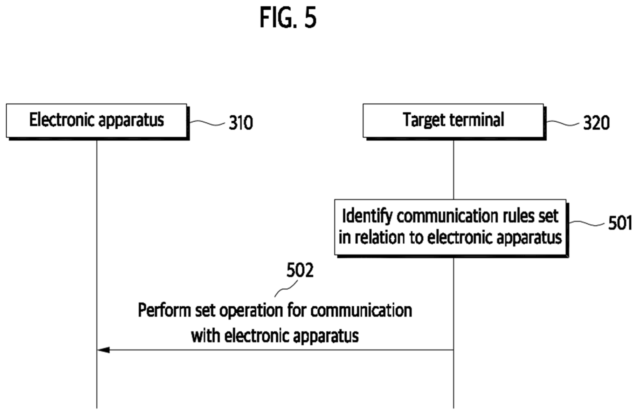

The operation of the target terminal 320 processing information is shown in FIG. 5. Referring further to FIG. 5, the target terminal 320 according to an example embodiment identifies communication rules set in relation to the electronic apparatus 310 (501). According to an example embodiment, the target terminal 320 may identify the communication rules stored in the target terminal 320. However, the scope of the present disclosure is not limited thereto. For example, the target terminal 320 may receive information about the communication rules set in relation to the electronic apparatus 310 from an external device, or may set communication rules considering the relationship with the electronic apparatus 310, and various example embodiments may fall within the scope of the present disclosure.

The communication rules identified by the target terminal 320 include an execution cycle of the set operation, a second time interval for data transmission by the target terminal 320 in each execution cycle of the set operation, and a first time interval for scanning by the electronic apparatus 310 in each execution cycle of the set operation, in which the second time interval is shorter than the first time interval. In this regard, the first time interval for scanning by the electronic apparatus 310 can be understood as a time interval set to acquire data transmitted by the target terminal 320.

For example, the communication rules identified by the target terminal 320 may include a rule where the execution cycle of the set operation is 60 seconds, a rule where a specific interval (e.g., from 5 seconds after the start point of the execution cycle of the set operation to 10 seconds after the start point, totaling 5 seconds) is set as the second time interval for transmitting data, and a rule where a specific interval (e.g., 15 seconds from the start point of the execution cycle of the set operation) is set as the first time interval for scanning.

According to an example embodiment, the second time interval for transmitting data may be set to be included within the first time interval during which the electronic apparatus 310 scans. However, the scope of the present disclosure is not necessarily limited thereto.

The target terminal 320 performs the set operation for communication with the electronic apparatus 310 based on the identified communication rules (502). The set operation performed by the target terminal 320 can be understood as a broad concept encompassing various types of operations for communicating with the electronic apparatus 310. According to one example, the set operation performed by the target terminal 320 includes an advertising procedure and, more specifically, may include a broadcast operation (which may be nondirectional but is not necessarily limited thereto) for communication with other devices. According to another example, the set operation performed by the target terminal 320 may include one or more of an operation of identifying the presence of the electronic apparatus 310, operation of identifying a channel for communication with the electronic apparatus 310, and operation of preparing to transmit data to the electronic apparatus 310. Additionally, various operations for performing communication with the electronic apparatus 310 may be included in the set operation of the present disclosure.

According to an example embodiment related to the operation of reference numeral 502, the target terminal 320 may determine whether the timepoint of performing the set operation satisfies a preset third condition. When the timepoint of performing the set operation satisfies the third condition, the target terminal 320 may transmit the target data through the set operation. When the timepoint of performing the set operation does not satisfy the third condition, the target terminal 320 may transmit data for checking whether there is an error with communication with the electronic apparatus 310 via the set operation (or, depending on example embodiments, it may check whether there is an error with communication without transmitting separate data).

In some embodiments, the target terminal 320 may also receive information through the set operation. For example, the target terminal 320 may receive information requesting target data through the set operation. However, for the sake of convenience, the focus will be on cases where the target terminal 320 transmits information through the set operation in the following description. Nevertheless, the following description may also be applied mutatis mutandis to cases where the target terminal 320 receives information through the set operation.

According to a more specific example related to the third condition, the third condition may include a condition that, when each execution cycles of the set operation performed is listed in chronological order based on the history of performing the set operation by the target terminal 320 for communication with the electronic apparatus 310, the "timepoint of performing the set operation" falls within the execution cycle of the set operation of an order corresponding to a multiple value of a set number. For example, when each execution cycle of the set operation is listed in chronological order, when the "the timepoint of performing the set operation" falls within an execution cycle of the set operation of an order corresponding to a multiple value of 5, the target terminal 320 transmits the target data, and when it falls within an execution cycle of the set operation of an order not corresponding to a multiple value of 5, the target terminal 320 transmit data for checking whether there is an error with communication with the electronic apparatus 310.

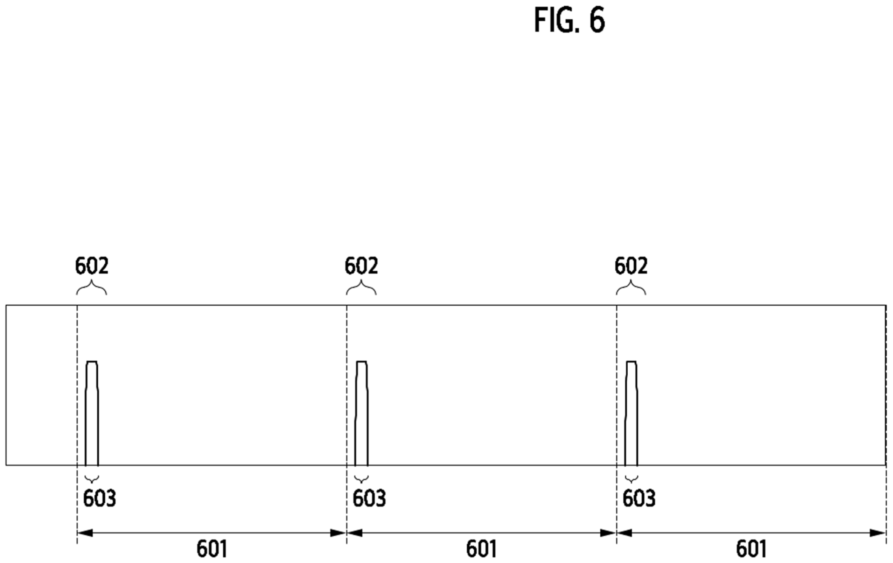

An example related to a scanning method of the electronic apparatus 310 and a method of the target terminal 320 for performing the set operation is illustrated in FIG. 6. Referring further to FIG. 6, the scanning cycle according to the communication rules determined by the electronic apparatus 310 and the execution cycle of the set operation according to the communication rules identified by the target terminal 320 match each other according to an example embodiment, which may be the same as reference numeral 601. For reference, even when the scanning cycle based on the communication rules determined by the electronic apparatus 310 and the execution cycle of the set operation based on the communication rules identified by the target terminal 320 do not match, it is not necessarily certain that there is a problem with at least one of the communication rules determined by the electronic apparatus 310 and the communication rules identified by the target terminal 320. However, even when the scanning cycle and the execution cycle of the set operation do not match exactly, it is generally the case that one cycle is a multiple of the other (e.g., the scanning cycle is 120 seconds and the execution cycle of the set operation is 60 seconds). When even this multiplicative relationship is not satisfied, it can be inferred that there is a high probability that there is a problem with at least one of the communication rules determined by the electronic apparatus 310 and the communication rules identified by the target terminal 320.

The first time interval for scanning by the electronic apparatus 310 in each cycle may be the same as reference numeral 602. The second time interval for the target terminal 320 to transmit data in each cycle may be the same as reference numeral 603. As described above, the first time interval for scanning by the electronic apparatus 310 according to an example embodiment may be set to include the second time interval for the target terminal 320 to transmit data. In FIG. 6, it can be identified that the time intervals of reference numeral 602 are set to include the time intervals of reference numeral 603.

Returning to FIG. 4, regarding the operation of reference numeral 402, the electronic apparatus 310 according to an example embodiment may determine whether the timepoint of scanning satisfies a preset second condition. When the timepoint of scanning satisfies the preset second condition, the electronic apparatus 310 may scan during the third time interval. In this regard, the third time interval according to an example embodiment may include a time interval longer than the first time interval. For example, when the first time interval is a segment having a total length of 15 seconds, the third time interval may be set as a segment having a length of 300 seconds.

Regarding the operation of reference numeral 502, the target terminal 320 according to an example embodiment may determine whether the timepoint of performing the set operation satisfies a preset fourth condition. When the timepoint of performing the set operation satisfies the preset fourth condition, the target terminal 320 may perform the set operation during the fifth time interval. In this regard, the fifth time interval according to an example embodiment may be longer than the second time interval.

In relation to the foregoing descriptions, when scanning during the first time interval or scanning during the third time interval, the electronic apparatus 310 is not necessarily required to scan continuously (i.e., without interruption) throughout that time interval. Furthermore, in relation to the foregoing descriptions, when performing the set operation during the second time interval or performing the set operation during the fifth time interval, the target terminal 320 is not necessarily required to perform the set operation continuously (i.e., without interruption) throughout that time interval.

In other words, the expression "scanning or a set operation during a certain time interval" means that scanning or the set operation "can be performed" during that time interval, not that a single operation must be performed continuously without interruption during that time interval.

Therefore, various example embodiments may fall within the scope of the present disclosure including an example embodiment where the electronic apparatus 310 scans at a 10ms cycle during the first time interval, with intervals between cycles where scanning is not performed, an example embodiment where the electronic apparatus 310 scans at a 1ms cycle during the third time interval, with intervals between cycles where scanning is not performed, an example embodiment where the target terminal 320 performs the set operation at a 10ms cycle during the second time interval, with intervals between cycles where the set operation is not performed, and an example embodiment where the target terminal 320 performs the set operation at a 1ms cycle during the fifth time interval, with intervals between cycles where the set operation is not performed, and so on.

Furthermore, according to an example embodiment, the third time interval may be implemented to include multiple time intervals longer than the first time interval "for continuously scanning," but with additional intervals between the multiple time intervals during which scanning is not performed. Moreover, according to an example embodiment, the fifth time interval may include multiple time intervals longer than the second time interval "for continuously performing the set operation," but with additional intervals between the multiple time intervals during which the set operation is not performed.

The second condition according to an example embodiment may include a condition that the timepoint of scanning falls within the initial scanning cycle, satisfying set criteria, for communication with the target terminal 320. The fourth condition according to an example embodiment may include a condition that the timepoint of performing the set operation falls within the initial execution cycle of the set operation that satisfies set criteria for communication with the electronic apparatus 310.

The "initial scanning cycle satisfying the set criteria" according to an example may include the cycle in which communication between the electronic apparatus 310 and the communication terminal 320 first succeeds. According to another example, the "initial scanning cycle satisfying the set criteria" may include the cycle in which communication between the electronic apparatus 310 and the communication terminal 320 first succeeds after a reboot of the communication terminal 320 or a reboot of the electronic apparatus 310. According to yet another example, the "initial scanning cycle satisfying the set criteria" may include the first cycle in which communication between the electronic apparatus 310 and the communication terminal 320 succeeds after communication between the electronic apparatus 310 and the communication terminal 320 has failed.

The "initial execution cycle of the set operation satisfying the set criteria" according to an example may include the cycle in which communication between the electronic apparatus 310 and the communication terminal 320 first succeeds. According to another example, the "initial execution cycle of the set operation satisfying the set criteria" may include the cycle in which communication between the electronic apparatus 310 and the communication terminal 320 first succeeds after a reboot of the communication terminal 320 or a reboot of the electronic apparatus 310. According to yet another example, the "initial execution cycle of the set operation satisfying the set criteria" may include the first cycle in which communication between the electronic apparatus 310 and the communication terminal 320 succeeds after communication between the electronic apparatus 310 and the communication terminal 320 has failed.

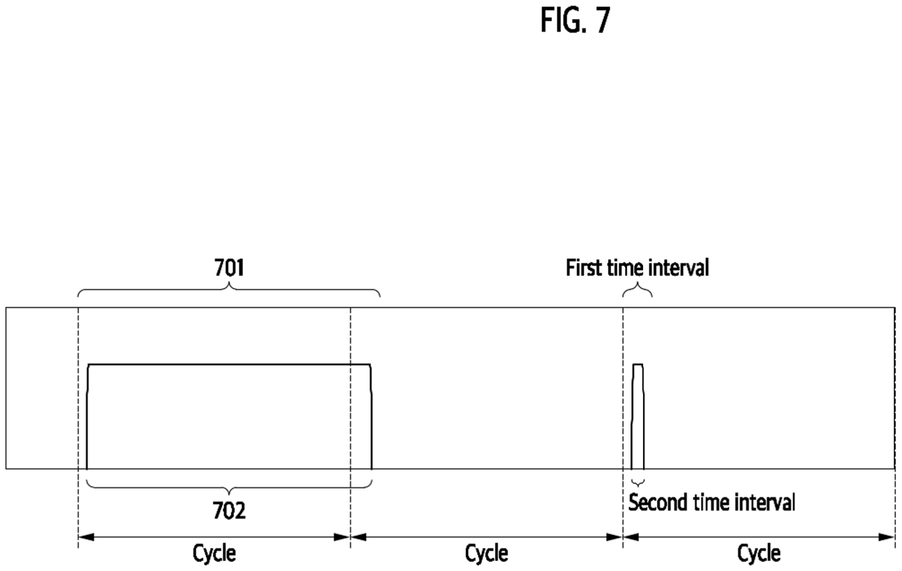

An example related to the case where the timepoint of scanning of the electronic apparatus 310 satisfies the second set condition and the timepoint of performing the set operation of the target terminal 320 satisfies the fourth set condition is illustrated in FIG. 7. Referring further to FIG. 7, the third time interval during which the electronic apparatus 310 scans may be the same as reference numeral 701. Furthermore, the fifth time interval during which the target terminal 320 performs the set operation may correspond to reference numeral 702. As can also be seen in FIG. 7, when the timepoint of scanning of the electronic apparatus 310 satisfies the second set condition and the timepoint of performing the set operation of the target terminal 320 satisfies the fourth set condition, the third time interval (see reference numeral 701) may be set to include the fifth time interval (see reference numeral 702).

Returning to FIG. 4, according to an example embodiment, when the timepoint of scanning satisfies the preset second condition, the electronic apparatus 310 may perform one or more of an operation of transmitting the communication rules to the target terminal 320 via scanning, and an operation of receiving the communication rules, identified by the target terminal 320, from the target terminal 320 via scanning. Furthermore, according to an example embodiment, when the timepoint of performing the set operation satisfies the preset fourth condition, the target terminal 320 may perform one or more of an operation of transmitting the communication rules to the electronic apparatus 310 through the set operation, and an operation of receiving the communication rules determined by the electronic apparatus 310 from the electronic apparatus 310 through the set operation. According to a specific example for better understanding, when communication between the electronic apparatus 310 and the target terminal 320 first succeeds, the electronic apparatus 310 may receive the communication rules identified by the target terminal 320 from the target terminal 320, thereby verifying whether the communication rules determined or identified by both devices do not contradict each other. In this context, "contradiction" refers to a situation where, when each device performs its operations according to the communication rules it has identified, it is estimated that normal communication will not be possible. This does not necessarily require that the contents of the communication rules determined or identified by both devices be completely identical.

In some cases, the electronic apparatus 310 may detect that there is a problem in communication with the target terminal 320. For example, during a specific scanning cycle, the electronic apparatus 310 may scan during a first time interval but fail to communicate with the target terminal 320. In such a case, the electronic apparatus 310 according to an example embodiment may perform continuous scanning without being constrained by the determined communication rules. The termination condition for continuous scanning may include a condition of identifying that the communication problem with the target terminal 320 has been resolved.

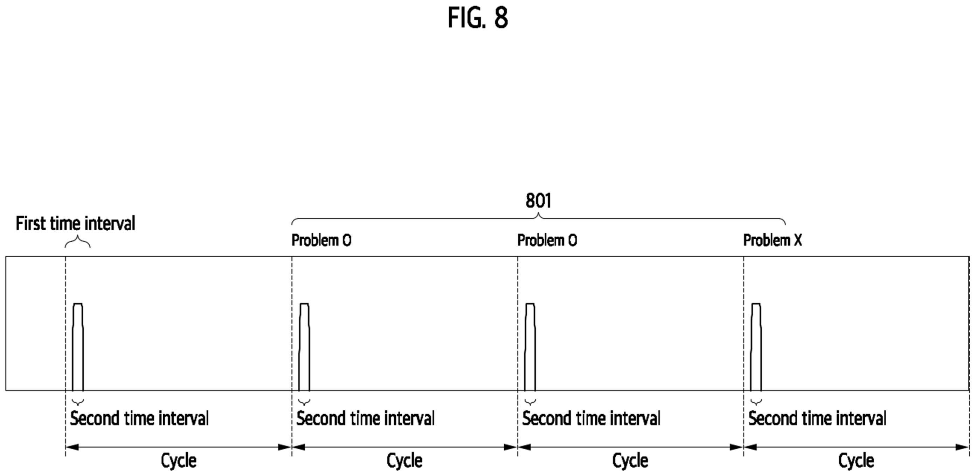

An example related to a case where a communication problem occurs between the electronic apparatus 310 and the target terminal 320 is illustrated in FIG. 8. Referring further to FIG. 8, during the second cycle of the four cycles shown, the electronic apparatus 310 may identify that there is a communication problem. Accordingly, the electronic apparatus 310 may continue to scan for the remainder of the second cycle, regardless of the identified communication rules. Next, in the third cycle, the electronic apparatus 310 may identify that there still is a communication problem, and the electronic apparatus 310 may perform continuous scanning in the third cycle as well. Next, in the fourth cycle, the electronic apparatus 310 may identify that the communication problem with the target terminal 320 has been resolved and may terminate the continuous scanning. Thus, the continuous scanning operation of the electronic apparatus 310 commenced during the second cycle and terminated during the fourth cycle, with the time interval during which continuous scanning was performed being as shown in reference numeral 801.

Returning to FIG. 4, according to an example embodiment, the termination condition for continuous scanning may further include a condition that the fourth time interval has elapsed since the initiation of continuous scanning. For example, when 20 minutes elapse after the initiation of continuous scanning, the electronic apparatus 310 may terminate continuous scanning even when the communication problem with the target terminal 320 has not been resolved. This condition can be understood as being set to prevent unnecessary waste of resources and time by the electronic apparatus 310 continuing connection attempts in situations where the connection problem with the target terminal 320 is predicted not to be resolved in the short term. However, the scope of the present disclosure is not necessarily limited to this.

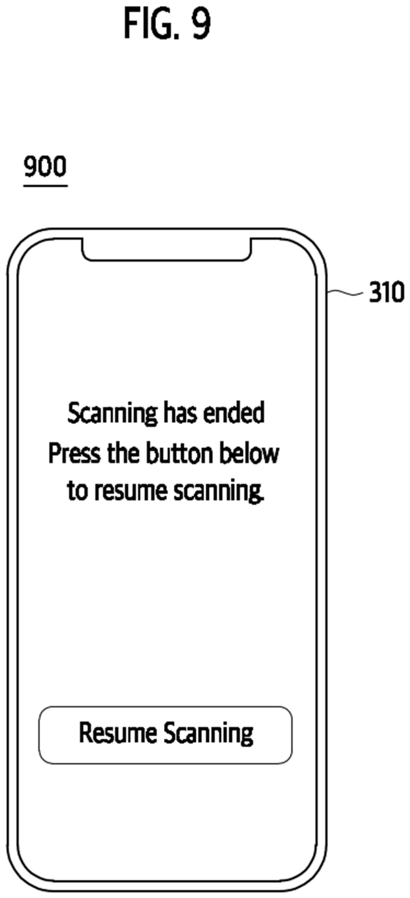

Upon termination of continuous scanning after the fourth time interval elapses, the electronic apparatus 310 according to an example embodiment may provide a user interface including a function to resume scanning for communication with the target terminal 320. An example of a user interface including a function to resume scanning is illustrated in FIG. 9. Referring further to FIG. 9, the electronic apparatus 310 according to an example embodiment may provide a button-type user interface containing text such as "Resume Scanning." Furthermore, the electronic apparatus 310 according to an example embodiment may also provide one or more of the following texts: "Scanning has ended," indicating the termination of scanning, and "Press the button below to resume scanning," indicating the provision of a function for resuming scanning. However, the example in FIG. 9 is provided to aid in understanding the present disclosure and does not limit the scope of the present disclosure.

Returning to FIG. 4, according to an example embodiment, the electronic apparatus 310 may identify that the fourth time interval has elapsed since the initiation of continuous scanning and, based on the new communication rules, may scan for communication with the target terminal 320 after the elapsed fourth time interval. That is, it can be understood that even when the fourth time interval has elapsed since the initiation of continuous scanning, the electronic apparatus 310 may not immediately terminate continuous scanning.

The new communication rules may include a new scanning cycle and a new time interval for scanning in each scanning cycle. The new scanning cycle may be set longer, shorter, or the same as the previous scanning cycle (the scanning cycle defined by the communication rules determined through the operation of reference numeral 401). For example, when the previous scanning cycle is 60 seconds, the new scanning cycle may be set to 120 seconds or 30 seconds. Setting the new scanning cycle longer may reduce the resources consumed by the electronic apparatus 310, while setting it shorter allows the electronic apparatus 310 to attempt communication with the target terminal 320 more aggressively. Thus, the method for setting the new scanning cycle may vary depending on whether resource conservation or the likelihood of successful communication is prioritized.

For each scanning cycle, the new time interval during which scanning is performed may be set longer, shorter, or the same as the previous first time interval. For example, when the first time interval has a total length of 15 seconds, the new scanning cycle may be set to have a total length of 20 seconds or a total length of 10 seconds. Setting the new time interval shorter may reduce the resources consumed by the electronic apparatus 310, while setting it longer allows the electronic apparatus 310 to attempt communication with the target terminal 320 more aggressively. Thus, the method for setting the new scanning cycle may vary depending on whether resource savings or the likelihood of successful communication is prioritized.

Depending on example embodiments, the electronic apparatus 310 may also determine the new scanning cycle and new time interval based on the elapsed time since the initiation of continuous scanning. That is, the new scanning cycle and new time interval may change dynamically depending on the elapsed time since the initiation of continuous scanning. According to a more specific example, after the fourth time interval has elapsed, the new scanning cycle may change to gradually become longer over time, and the new time interval may change to gradually become shorter over time (when resource conservation is prioritized). According to another specific example, after the fourth time interval has elapsed, the new scanning cycle may gradually become shorter over time, and the new time interval may gradually become longer over time (when prioritizing the success probability of communication).

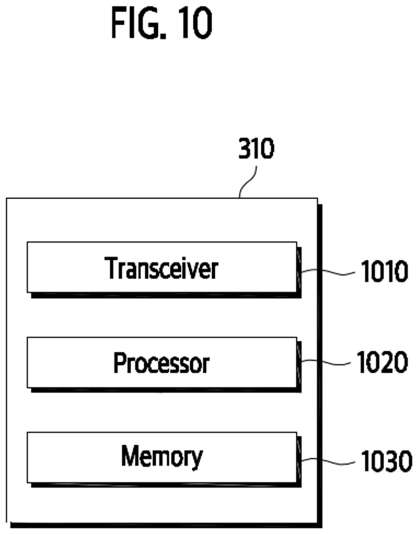

FIG. 10 is an exemplary diagram of a configuration of an electronic apparatus according to an example embodiment.

Referring to FIG. 10, the electronic apparatus 310 may include a transceiver 1010, a processor 1020, and a memory 1030. The electronic apparatus 310 may be connected to the target terminal 320 through the transceiver 1010, and may exchange data therewith.

The processor 1020 may include at least one apparatus described above with reference to FIGS. 1 to 9, or it may perform at least one method described above with reference to FIGS. 1 to 9. The memory 1030 may store information for performing at least one method described above with reference to FIGS. 1 to 9. The memory 1030 may be a volatile memory or a nonvolatile memory.

The processor 1020 may control the electronic apparatus 310 to execute a program and provide information. The code of the program executed by the processor 1020 may be stored in the memory 1030.

Also, the electronic apparatus 310 according to an example embodiment may further include an interface capable of providing a user or an administrator with information.

According to example embodiments, it is possible to prevent excessive power consumption and resource consumption by devices while maintaining a low level of potential problems in communication between devices.

Furthermore, according to example embodiments, when a communication problem occurs, it is possible to quickly resolve the problem so that communication between devices can resume normally.

The effects of the present disclosure are not limited to the effects mentioned above, and other effects not mentioned will be clearly understood by those skilled in the art from the description of the claims.

Example embodiments of the present disclosure have been disclosed in the present specification and drawings. Although specific terms are used, these are only used in general meaning to easily explain the technical content of the present disclosure and to aid understanding of the present disclosure, but not intended to limit the scope of the present disclosure. It is obvious to those skilled in the art that other modified examples based on the technical idea of the present disclosure can be implemented in addition to the example embodiments disclosed herein.

The apparatus or terminal according to the above-described example embodiments may include a processor, a memory for storing and executing program data, a permanent storage such as a disk drive, a communication port for communicating with an external device, a user interface device such as a touch panel, a key, a button, or the like. Methods implemented as software modules or algorithms may be stored on a computer-readable recording medium as computer-readable codes or program instructions executable on the processor. Here, the computer-readable recording medium includes a magnetic storage medium (e.g., ROM (read-only memory), flash memory, RAM (random-access memory), floppy disk, hard disk, etc.) and optical reading medium (e.g., CD-ROM and DVD (Digital Versatile Disc)). The computer-readable recording medium is distributed over networked computer systems, so that computer-readable codes can be stored and executed in a distributed manner. The medium is readable by a computer, stored in a memory, and executed on a processor.

The present example embodiment can be represented by functional block configurations and various processing steps. These functional blocks may be implemented with various numbers of hardware or/and software configurations that perform specific functions. For example, the example embodiment may employ an integrated circuit configuration such as memory, processing, logic, look-up table, or the like, capable of executing various functions by control of one or more microprocessors or other control devices. Similar to that components can be implemented with software programming or software elements, this example embodiment includes various algorithms implemented with a combination of data structures, processes, routines or other programming components and may be implemented with a programming or scripting language including C, C++, Java, assembler, Python, etc. Functional aspects can be implemented with an algorithm running on one or more processors. In addition, the present example embodiment may employ a conventional technique for at least one of electronic environment setting, signal processing, and data processing. Terms such as "mechanism", "element", "means", and "composition" can be used in a broad sense, and are not limited to mechanical and physical configurations. Those terms may include the meaning of a series of routines of software in connection with a processor or the like.

The above-described example embodiments are merely examples, and other example embodiments may be implemented within the scope of the claims to be described later.

## Claims

1. An information processing method of an electronic apparatus (310), the information processing method comprising:
determining (401) communication rules set in relation to a target terminal (320); and
scanning (402) for communication with the target terminal (320), based on the communication rules,
wherein the communication rules include:
a scanning cycle,
a first time interval for scanning by the electronic apparatus (310) in each scanning cycle, and
a second time interval for data transmission by the target terminal (320) in each scanning cycle, and
wherein the second time interval is shorter than the first time interval.

2. The information processing method of claim 1, wherein the scanning for communication with the target terminal (320) comprises:
determining whether a timepoint of scanning satisfies a preset first condition;
when the timepoint of scanning satisfies the first condition, receiving target data through scanning; and
when the timepoint of scanning does not satisfy the first condition, checking whether there is an error with communication with the target terminal (320) through scanning.

3. The information processing method of claim 2, wherein the first condition includes a condition that, when each scanning cycle is listed in chronological order based on a scanning history performed for communication with the target terminal (320), the timepoint falls within the scanning cycle of an order corresponding to a multiple value of a set number.

4. The information processing method of claim 2 or 3, wherein the target data includes data related to health status of a user associated with the target terminal (320), acquired by the target terminal (320).

5. The information processing method of any one of claims 1 to 4, wherein the scanning for communication with the target terminal (320) comprises:
determining whether a timepoint of scanning satisfies a preset second condition; and
when the timepoint of scanning satisfies the second condition, scanning during a third time interval.

6. The information processing method of claim 5, wherein the third time interval is longer than the first time interval.

7. The information processing method of claim 5 or 6, wherein the second condition includes a condition that the timepoint falls within an initial scanning cycle, satisfying set criteria, for communication with the target terminal (320).

8. The information processing method of any one of claims 5 to 7, wherein the performing of scanning for communication with the target terminal (320) further comprises one or more of:
when the timepoint satisfies the second condition, transmitting the communication rules to the target terminal (320) through scanning; and
when the timepoint satisfies the second condition, receiving communication rules, identified by the target terminal (320), from the target terminal (320) through scanning.

9. The information processing method of any one of claims 1 to 8, further comprising:
identifying that there is a problem in communication with the target terminal (320); and
performing continuous scanning regardless of the communication rules, wherein a termination condition for the continuous scanning includes a condition of identifying that the problem in communication with the target terminal (320) has been resolved.

10. The information processing method of claim 9, wherein the termination condition for the continuous scanning further includes a condition that a fourth time interval elapses since initiation of the continuous scanning.

11. The information processing method of claim 10, further comprising:
providing a user interface which includes a function to resume scanning for communication with the target terminal (320) when the continuous scanning is terminated upon elapsing of the fourth time interval.

12. The information processing method of any one of claims 9 to 11, further comprising:
identifying that the fourth time interval has elapsed since initiation of the continuous scanning; and
scanning for communication with the target terminal (320) after elapsing of the fourth time interval, based on new communication rules,
wherein the new communication rules include a new scanning cycle and a new time interval for scanning during each scanning cycle, and
wherein the new scanning cycle and the new time interval are determined based on elapsed time since the initiation of the continuous scanning.

13. A non-transitory computer-readable medium having a program for executing the information processing method of any one of claims 1 to 12 on a computer recorded thereon.

14. An electronic apparatus (310) for processing information, the electronic apparatus (310) comprising:
a transceiver;
a memory configured to store instructions; and
a processor,
wherein the processor is connected to the transceiver and the memory and is configured to:
determine (401) communication rules set in relation to a target terminal (320); and
scan (402) for communication with the target terminal (320), based on the communication rules,
the communication rules include:
a scanning cycle,
a first time interval for scanning by the electronic apparatus (310) in each scanning cycle, and
a second time interval for data transmission by the target terminal (320) in each scanning cycle, and
wherein the second time interval is shorter than the first time interval.

15. An information processing method of a target terminal (320), the information processing method comprising:
identifying (501) communication rules set in relation to an electronic apparatus (310); and
performing (502) a set operation for communication with the electronic apparatus (310), based on the communication rules,
wherein the communication rules include:
an execution cycle of the set operation,
a second time interval for data transmission by the target terminal (320) in each execution cycle of the set operation, and
a first time interval for scanning by the electronic apparatus (310) in each execution cycle of the set operation, and
wherein the second time interval is shorter than the first time interval.
